# EUROPEAN PATENT SPECIFICATION

(11) **EP 2 592 722 B1**
(45) Date of publication and mention of the grant of the patent: **19.12.2018**
(21) Application number: 12006686.5
(22) Date of filing: 25.09.2012
(51) Int. Cl.: H02K 3/52

(54) **Electric motor winding connection and method of assembling it**
Kontaktierung von Elektromotorwicklungen und Montageverfahren dafür
Connexions des enroulements d'un moteur électrique et son procédé d'assemblage

(30) Priority: 10.11.2011 JP 2011246445
(43) Date of publication of application: 15.05.2013
(73) Proprietor: Sumitomo Wiring Systems, Ltd., Yokkaichi-city Mie 510-8503 (JP)
(72) Inventor: Hashimoto, Tsutomu, Yokkaichi-City Mie 510-8503 (JP)
(74) Representative: Müller-Boré & Partner Patentanwälte PartG mbB

(56) References cited:
- EP-A2- 2 182 614
- WO-A1-99/45625
- JP-A- 2003 134 759
- JP-A- 2003 317 821
- US-A1- 2005 179 329
- US-A1- 2009 243 408

## Description

The present invention relates to a central power supply member for motor and to a method of assembling it.

An example of a central power supply member for supplying power to windings of a stator of a motor is known from Japanese Unexamined Patent Publication No. 2003-134759. This central power supply member is structured such that a plurality of ring-shaped busbars each including one power supply terminal connected to a power supply and a plurality of connecting terminals connected to the wirings on one lateral edge and each having a different diameter are provided, a ring-shaped resin holder with as many concentric accommodating grooves as the busbars is provided, and the respective busbars are inserted into the corresponding accommodating grooves in the holder to be concentrically arranged while being insulated from each other.

Here, if the busbars are of a type that the connecting terminals project radially outward of the busbars similarly to the power supply terminals, they only have to be successively inserted into the accommodating grooves from the outermost groove in accommodating the busbars into the holder. However, if the busbars are of a type that the connecting terminals project radially inward contrary to the power supply terminals as disclosed in Japanese Unexamined Patent Publication No. 2003-134759, it is not possible to successively insert the busbars into the accommodating grooves from either an inner or an outer side. This is because the connecting terminals or the power supply terminal of the previously inserted busbar stand as a hindrance in inserting the next busbar.

Accordingly, in the central power supply member disclosed in Japanese Unexamined Patent Publication No. 2003-134759, the connecting terminals that are thinner and relatively more easily bent than the power supply terminals are initially formed to stand up along an axial direction of the busbars and, after the respective busbars are successively inserted into the accommodating grooves from the outer side, the connecting terminals of all the busbars are bent radially inwardly.

In the above conventional method, the connecting terminals are relatively easily bent, but there has been a problem of correspondingly requiring labor to bend all the connecting terminals into proper shapes while paying attention so as not to damage the resin holder, i.e. a problem of requiring labor in assembling the central power supply member.

Cumbersomeness in connecting a power-supply side terminal to the power supply terminal of each busbar can be cited as another problem different from the above one. That is, the power supply terminal and the power-supply side terminal are connected by bolting. Specifically, after a bolt is inserted into insertion holes provided in the both terminals and a nut is threadably engaged with a projecting end of the bolt, one of the nut and the bolt is screwed using a tool with the rotation of the other thereof prevented. Since it is forced to perform a very cumbersome operation, an improvement thereof has also been desired.

US 2005/179329 A1 discloses a motor for an electric power steering apparatus. A bracket is disposed at an opening of a cylindrical bottomed frame. A stator with a stator winding is fixed to the frame around a rotor. Stator-side terminals each having a connection portion extending toward the bracket are disposed between the stator and the bracket, and are connected with the stator winding. A connector base includes connection terminals connected with tip ends of the connection portions, a base portion with the connection terminals disposed on a surface thereof, and nuts mounted on the base portion. Leads have, at their one end, lead-side terminals in contact with the connection terminals. Screws are threaded on the nuts, respectively, for coupling the connection terminals and the lead-side terminals.

The present invention was completed in view of the above situation and an object thereof is to simplify an operation of assembling a central power supply member itself and an operation of connecting a power-supply side terminal to a power supply terminal.

This object is solved according to the invention by the features of the independent claims. Particular embodiments of the invention are subject of the dependent claims.

According to one aspect of the invention, there is provided a central power supply member as defined in claim 1.

Since only the connecting terminals are formed to substantially project radially inward and the power supply terminals are formed to stand up along the axial direction, the respective busbars substantially are concentrically at least partly accommodated by being successively inserted into the holder from the inner or outer side depending on the orientation of the connecting terminals. Thereafter, when the terminal block is temporarily assembled at the specified (predetermined or predeterminable) position of the holder, the power supply terminal of the corresponding busbar comes into contact with this terminal block. Thus, the mating power-supply side terminal is placed on the power supply terminal and connected.

According to the invention the power-supply side terminals drawn out from a power supply are to be connected by tightening bolts.

In accommodating the busbars into the holder, the busbars only have to be successively inserted from the radially inner or outer side, i.e. an assembling operation of the central power supply member is easily performed. Further, in connecting the power supply terminal to the mating power-supply side terminal, it is sufficient to place the power-supply side terminal on the power supply terminal held in contact with the terminal block and then secure them e.g. by inserting the bolt through the both terminals and screw the bolt into the nut. Thus, a connecting operation of the both terminals can also be easily performed.

Particularly, in the terminal blocks nuts to be threadably engaged with the bolts are provided at the specified predetermined positions of the holder to able to be temporarily assembled.

The connecting terminals are formed to project radially inward of the busbars; L-shaped or bent auxiliary power supply terminals are provided, other ends of the auxiliary power supply terminals project radially outward of the busbars by bringing one ends thereof into contact with the outer surfaces of the power supply terminals, and the other ends of the auxiliary power supply terminals are secured to the power-supply side terminals particularly by the bolts on placing surfaces provided on the terminal blocks.

Each terminal block includes a mounting surface on which the power supply terminal and the one end of the auxiliary power supply terminal at least partly are placed and secured particularly by a bolt.

When the respective busbars are successively accommodated into the holder from the radially inner side and then the one ends of the auxiliary power supply terminals are placed on the power supply terminals of the respective busbars and the terminal blocks are temporarily assembled, the power supply terminals and the one ends of the auxiliary power supply terminals are placed one over the other on the mounting surfaces of the terminal blocks and the terminal blocks are fixed to the power supply terminals by securing the placed parts by the bolts. At this time, since the other ends of the auxiliary power supply terminals extending outward from the power supply terminals are placed on the placing surfaces of the terminal blocks, the mating auxiliary power supply terminals and the power supply terminals are connected by placing the mating power-supply side terminals on the other ends of the auxiliary power supply terminals and securing the both terminals by the bolts.

For a central power supply member in which power supply terminals project radially outward and connecting terminals project radially inward on one lateral edge of each busbar, both an assembling operation of the central power supply member and a connecting operation of the power supply terminal and a power-supply side terminal can be easily performed.

Each terminal block is formed into an L shape or bent shape including a vertical portion standing up substantially along the outer surface of the holder and a horizontal portion substantially projecting outward from a lower position of the vertical portion.

The mounting surface is formed on an upper position of the outer surface of the vertical portion, the placing surface is formed on the upper surface of the horizontal portion, and an insertion groove into which the other end of the auxiliary power supply terminal at least partly is inserted is formed at a position of the vertical portion substantially aligned with the upper surface of the horizontal portion.

Further particularly, one or more mounting recesses into which nuts to be threadably engaged with the respective bolts are mounted with the rotation thereof prevented are provided at the mounting surface and the placing surface.

The busbars formed with the standing power supply terminals are concentrically accommodated in the holder. On the other hand, the auxiliary power supply terminal is assembled with the terminal block while the other end thereof is inserted into the insertion groove, and the other end of the auxiliary power supply terminal is placed on the placing surface when the one end of the auxiliary power supply terminal comes into contact with the mounting surface. When the terminal block assembled with the auxiliary power supply terminal in this way is temporarily assembled at the predetermined position of the holder, the power supply terminal standing up from the corresponding busbar is placed on the one end of the auxiliary power supply terminal on the mounting surface and the terminal block is fixed to the power supply terminal by inserting the bolt through the placed parts, threadably engaging the bolt with the nut provided at the mounting surface and tightening the bolt. Thereafter, the mating power-supply side terminal is placed on the other end of the auxiliary power supply terminal placed on the placing surface and the bolt is inserted through the placed parts, threadably engaged with the nut provided at the placing surface and tightened, whereby the both terminals are connected.

The nuts arranged at the mounting surface and the placing surface particularly are identically shaped.

Since the common nuts are used at the mounting surface side and at the placing surface side, the number of part types can be suppressed, which can contribute to a cost reduction.

According to a further aspect of the invention, there is provided a method as defined in claim 5.

According to the invention, the power-supply side terminals drawn out from a power supply are connected by tightening bolts.

The terminal blocks are provided at specific positions of the holder to be able to be temporarily assembled.

Each terminal block is formed into an L shape or bent shape including a vertical portion standing up substantially along the outer surface of the holder and a horizontal portion substantially projecting outward from a lower position of the vertical portion.

The mounting surface is formed on an upper position of the outer surface of the vertical portion, the placing surface is formed on the upper surface of the horizontal portion, and an insertion groove into which the other end of the auxiliary power supply terminal preferably at least partly is inserted is formed at a position of the vertical portion substantially aligned with the upper surface of the horizontal portion.

Particularly, one or more mounting recesses into which nuts to be threadably engaged with the respective bolts preferably are mounted with the rotation thereof prevented are provided at the mounting surface and the placing surface.

According to the above, it is possible to simplify an operation of assembling a central power supply member itself and an operation of connecting a power-supply side terminal to a power supply terminal.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is an exploded perspective view of a central power supply member according to one embodiment of the present invention,
FIG. 2 is a vertical section of a terminal block,
FIG. 3 is a plan view showing a state where busbars are accommodated in a holder,
FIG. 4 is a partial enlarged view of FIG. 3,
FIG. 5 is a perspective view showing a mounting structure of the terminal blocks,
FIG. 6 is a perspective view partly in section of the holder in a mounted state of the terminal blocks when viewed from an inner side,
FIG. 7 is a plan view when an assembling operation is completed,
FIG. 8 is a partial enlarged view of FIG. 7, and
FIG. 9 is a section along IX-IX of FIG. 8.

### <Embodiment>

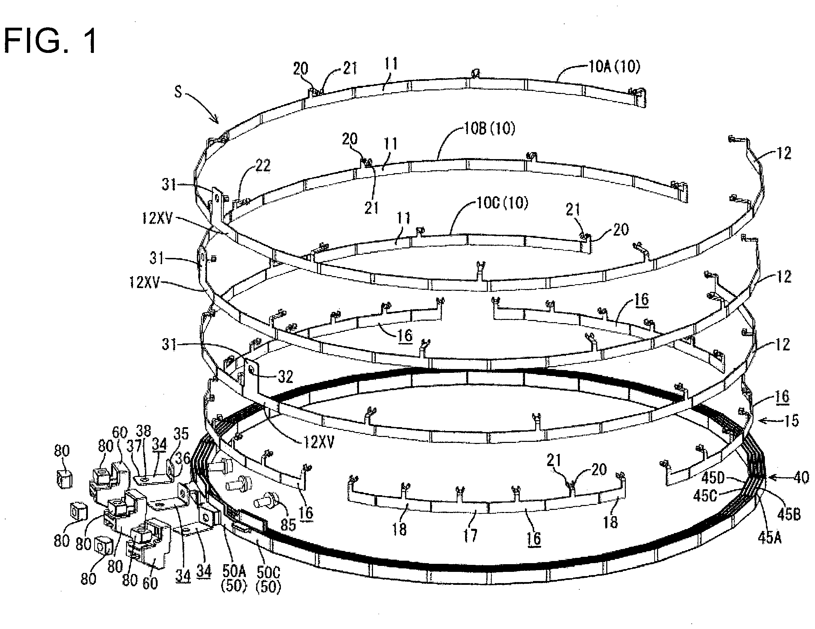

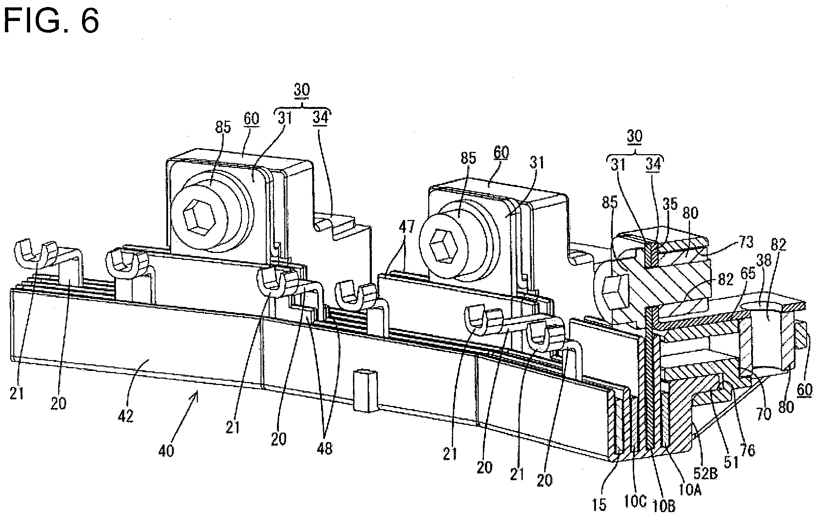

One particular embodiment of the present invention is described with reference to FIGS. 1 to 9.

A motor of this embodiment is a three-phase alternating-current brushless motor particularly with ten pairs of poles to be installed in a hybrid vehicle, arranged in a small space, for example, between an engine and a transmission and includes a rotor (not shown) coaxially coupled to a horizontal crankshaft of the engine, a ring-shaped stator (not shown) concentrically surrounding the rotor and a ring-shaped central power supply member S substantially concentrically surrounding the stator. The stator is composed of or comprises a plurality of magnetic poles (not shown) particularly formed by winding wires around cores, and/or the magnetic poles particularly are arranged at substantially constant pitches along a circumference substantially concentric with the rotor, and both ends of the winding are drawn out from each magnetic pole, i.e. a star connection method is adopted.

The central power supply member S is for supplying power to the windings of the stator and includes, as shown in FIG. 1, a plurality of (e.g. three) busbars 10, one neutral point busbar 15 (divided into a plurality of (e.g. five) sections), and a holder 40 in which these busbars 10, 15 are substantially concentrically accommodated while being insulated from each other.

Each of three busbars 10 includes a plurality of (e.g. ten) connecting terminals 20 each to be connected to one end of each winding and one power supply terminal (composed of or comprising a main portion 31 and an auxiliary portion 34) to be connected to a mating power-supply side terminal (not shown) such as an LA terminal. Each of (e.g. five) divided busbars 16 forming the neutral point busbar 15 includes a plurality of (e.g. six) connecting terminals 20 to be connected with the other sides of the respective windings.

The busbar 10 is roughly structured such that a plurality of (e.g. ten) connecting terminals 20 and the main portion 31 of the power supply terminal 30 are integrally formed to a busbar main body 11 particularly substantially in the form of a regular plural-sided (e.g. 30-sided) ring. As a whole, there are provided three busbars 10 having different diameters, specifically the busbar 10A with a maximum diameter, the at least one busbar 10B with a middle or intermediate diameter and the busbar 10C with a minimum diameter.

Note that when the plurality of (e.g. three) busbars 10A, 10B and 10C are commonly described below, they are described as the busbars 10 as appropriate.

The power supply terminal 30 is formed to be separate from the auxiliary portion 34 that serves as a connection end side with the mating power-supply side terminal as described in detail later, and is integrally connected to the main portion 31 later.

The busbar main body 11 is formed into the regular 30-sided ring by bending a metal strip material at a specified (predetermined or predeterminable) angle (168°) at every specified (predetermined or predeterminable) length in a plate thickness direction. However, two sides at an end side out of plural (e.g. thirty) sides of the substantially regular 30-sided shape are cut off and one side at the remaining end is cut to be less than about half (e.g. about ¼) of a normal length.

The connecting terminal 20 is so shaped that an upper end side with a connecting portion 21 is bent at an angle different from 0° or 180°, preferably substantially at a right angle toward the center of the ring shape of the busbar main body 11 after standing up or projecting from (particularly the upper edge of) the busbar main body 11. The connecting terminals 20 particularly are formed in the above posture on every other side 12 including a side 12 at the start end of the busbar main body 11 and on the short side 12 at the end edge, i.e. at a total of ten positions in the shown example.

Here, a lateral or horizontal projecting portion 22 including the connecting portion 21 of the connecting terminal 20 is formed to be longer in the busbar 10 having a larger diameter.

The neutral point busbar 15 is obtained by dividing a substantially regular plural-sided (e.g. 30-sided) ring of a conductive (particularly metal) strip material similar to the above into five divided busbars 16. A busbar main body 17 of each divided busbar 16 particularly is so shaped that two sides having a length slightly longer than half the normal length are connected to both ends of four sides of the regular 30-sided shape, and connecting terminals 20 similar to those described above are integrally or unitarily formed to project from plural intermediate sides 18 (particularly the upper edges of central parts of central four sides 18) in a length direction and from the upper or lateral edges of free ends of two sides 18 at the opposite ends. The connecting terminals 20 of the neutral point busbar 15 include laterally or horizontal projecting portions 22 shorter than the connecting terminals 20 provided on the busbar 10C with the minimum diameter.

The neutral point busbar 15 is formed particularly substantially by arranging these (e.g. five) divided busbars 16 at specified (predetermined or predeterminable) intervals in a ring shape with a smaller diameter than the above busbar 10C with the minimum diameter. As a whole, plural (e.g. thirty) connecting terminals 20 particularly substantially are arranged at equal angular intervals in a posture substantially facing toward the center of the ring shape of the neutral point busbar 15.

The power supply terminal 30 on the busbar 10 is described again. The main portion 31 of the power supply terminal 30 is integrally or unitarily formed to project from the upper edge of a specified (predetermined or predeterminable) side of the busbar main body 11, e.g. the fifteenth side 12XV from the start end. The main portion 31 is in the form of a tongue piece having the same plate thickness as the side 12XV and projects axially or upward while being flush with the side 12XV.

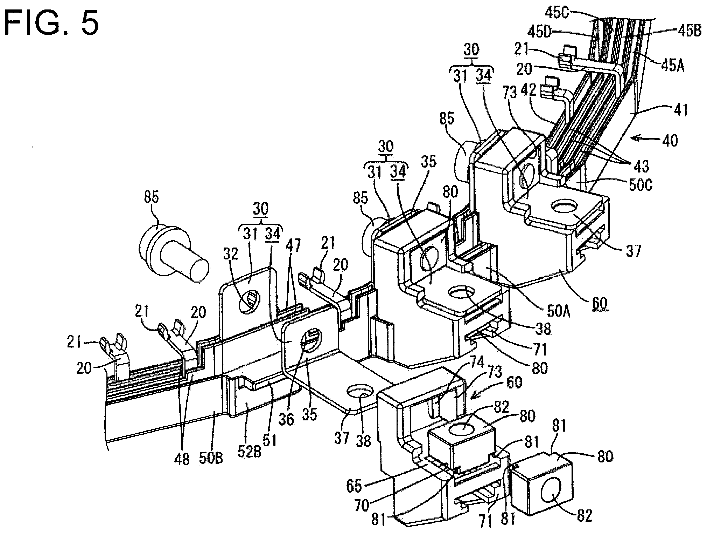

The auxiliary portion 34 is integrally attachable to the main portion 31 of each power supply terminal 30. The auxiliary portion 34 is formed by bending, folding and/or embossing a conductive (particularly metal) strip material and, as shown in FIG. 5, particularly substantially formed into an L shape or bent shape that a connecting plate 37 is bent outward at an angle different from 0° or 180°, preferably substantially at a right angle at the bottom end of a mounting plate 35 to be held in contact with the outer surface of the main portion 31. This auxiliary portion 34 is connected to the main portion 31 particularly by bolting as described later. Thus, the mounting plate 35 of the auxiliary portion 34 and an upper or distal end part of the main portion 31 particularly are formed with substantially aligned bolt insertion holes 36, 32.

Further, the mating power-supply side terminal is to be at least partly placed on the connecting plate 37 of the auxiliary portion 34 and connected particularly by bolting. Thus, another bolt insertion hole 38 particularly is also formed at a position of the connecting plate 37 near the projecting end.

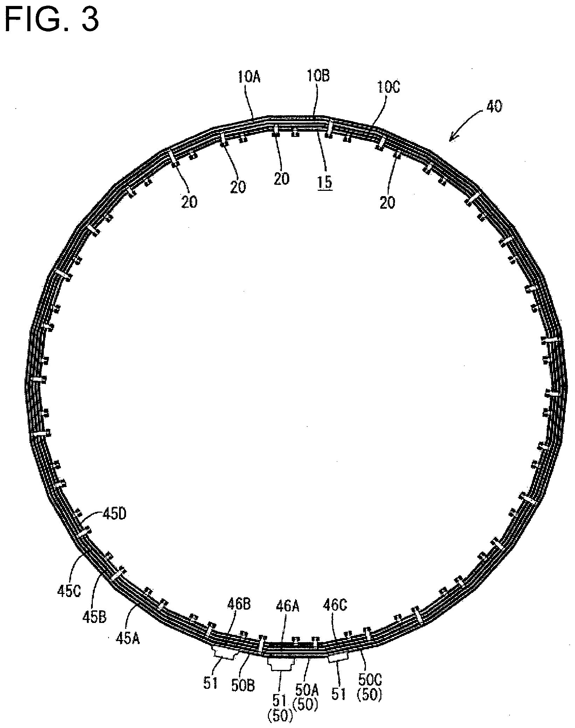

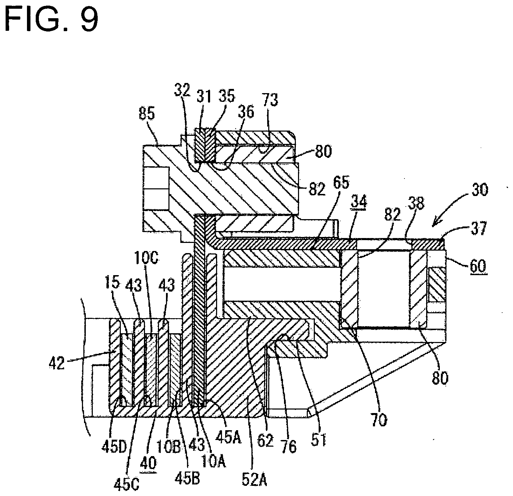

The holder 40 is made e.g. of synthetic resin, which is an insulating material, in the form of a groove with an open upper or lateral surface and formed into a regular plural-sided (e.g. 30-sided) ring similarly to the busbars 10 as shown in FIG. 3. The depth of the holder 40 is slightly larger than the width of the busbar main bodies 11 of the busbars 10 as shown in FIG. 9. One or more (e.g. three) partition walls 43 having a regular plural-sided (e.g. 30-sided) shape are formed to stand up or project from (particularly the inner bottom surface of) the holder 40 (particularly substantially over the entire height) while being spaced apart by a specified (predetermined or predeterminable) distance in a radial direction.

In this way, four regular plural-sided (e.g. 30-sided) accommodating grooves 45 having different diameters substantially are concentrically arranged at the opposite sides of the respective partition walls 43.

Out of the plural (e.g. four) accommodating grooves 45 of the holder 40, the busbar 10A with the maximum diameter is at least partly accommodated into the outermost accommodating groove 45A, the busbar 10B with the middle or intermediate diameter into the intermediate (e.g. second) accommodating groove 45B from the outer side and the busbar 10C with the minimum diameter into the more inward intermediate (e.g. third) accommodating groove 45C from the outer side, and the neutral point busbar 15 is at least partly accommodated into the innermost accommodating groove 45D.

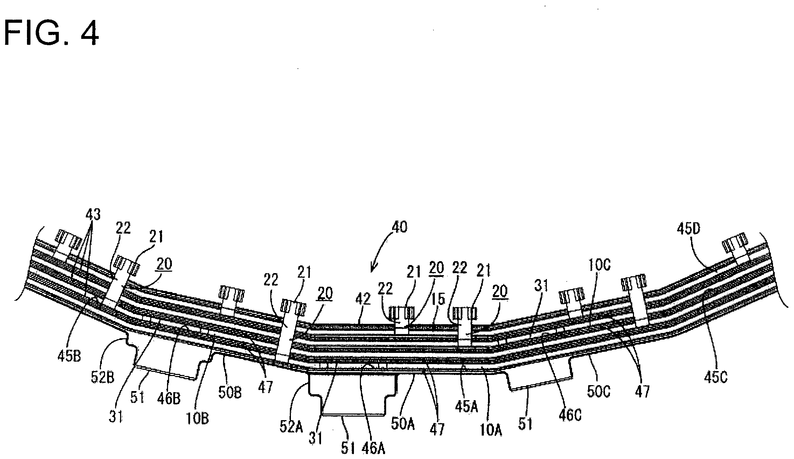

Accommodating positions 46A to 46C for the main portions 31 of the power supply terminals 30 provided on the respective busbars 10A to 10C are set in the outer (e.g. three) accommodating grooves 45A to 45C. The respective accommodating positions 46A to 46C particularly substantially are set on three sides arranged along a circumferential direction. Specifically, as shown in FIG. 4, the accommodating position 46B in the second accommodating groove 45B is located on the side adjacent to the accommodating position 46A in the outermost accommodating groove 45A in a clockwise direction and the accommodating position 46C in the third accommodating groove 45B is located on the side adjacent to the accommodating position 46A in a counterclockwise direction.

At each accommodating position 46A to 46C, one or more, particularly a pair of wide holding walls 47 are formed to stand up or project from (particularly the upper edges of) the partition walls 43 (outer wall 41 in part) particularly on the substantially opposite sides of the accommodating groove 45A to 45C, and a lower part of the power supply terminal 30 provided on the corresponding busbar 10A to 10C is arranged adjacent to the holding wall(s) 47, particularly at least partly sandwiched and held between this pair of holding walls 47.

Note that auxiliary holding walls 48 for protecting a standing part of the connecting terminal 20 formed laterally (to the left) of and adjacent to the main portion 31 particularly by sandwiching it as shown in FIG. 5 are formed to project from lower parts of the lateral (left) edges of each pair of holding walls 47 when viewed from front.

One or more terminal blocks 60 for receiving the power supply terminals 30 arranged on the respective busbars 10 are to be respectively mounted on the outer surfaces (hereinafter, mounting surfaces 50 (50A to 50C)) of the three sides of the holder 40 where the respective accommodating positions 46A to 46C are set.

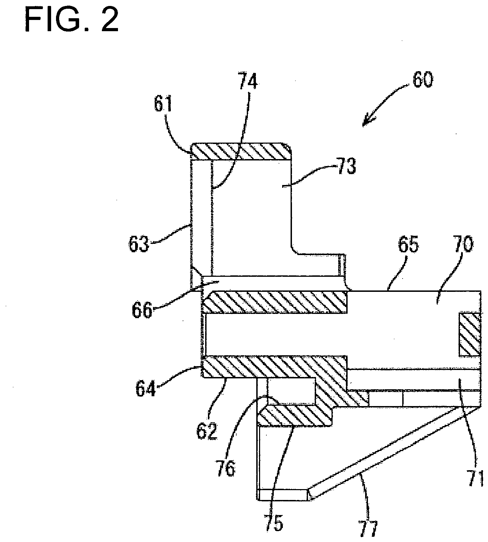

The terminal block 60 is made e.g. of synthetic resin and formed into an L shape or bent shape including a vertical portion 61 (as a particular first portion) standing up or projecting substantially along the outer surface of the holder 40 and a horizontal portion 62 (as a particular second portion) projecting at an angle different from 0° or 180°, preferably substantially outward from a lower position of this vertical portion 61 (first portion) as shown in FIG. 2.

A mounting surface 63 with which the mounting plate 35 of the auxiliary portion 34 of the power supply terminal 30 described above is to be substantially brought into contact is formed at (particularly an upper or distal position of) the outer surface (surface facing the holder 40) of the vertical portion 61. Note that an escaping surface 64 slightly retracted to allow the holding walls 47 of the holder 40 to substantially escape is formed at a lower position of the outer surface of this vertical portion 61.

On the other hand, the upper surface of the horizontal portion 62 (second portion) serves as a placing surface 65 on which the connecting plate 37 of the auxiliary portion 34 is to be at least partly placed.

Further, an insertion groove or recess 66 into which the connecting plate 37 of the auxiliary portion 34 at least partly is insertable is formed at (particularly a lower end position of) the mounting surface 63 of the vertical portion 61, i.e. particularly at a position substantially aligned with the placing surface 65.

A nut mounting hole 70 in which a nut 80 is to be mounted particularly with the rotation thereof prevented is formed on a projecting end side of the placing surface 65 of the terminal block 60. The nut 80 particularly has a rectangular or polygonal outer shape as shown in FIG. 5, and cut portions 81 are provided at lower corners of the lateral (left and/or right) side surface(s) thereof.

The nut mounting hole 70 particularly has a rectangular or polygonal planar shape at least partly substantially in conformity with the outer shape of the nut 80 and penetrates in a vertical direction. Receiving portions 71 for receiving lower edge parts of the nut 80 from the lateral (left and/or right) side surface(s) to the back surface are formed at a bottom part of this nut mounting hole 70 from the lateral (left and/or right) edge(s) to the back edge when viewed from front. The lateral (left and/or right) receiving portion(s) 71 is/are formed into step shape(s) to be engaged with the cut portion(s) 81 of the nut 80.

The nut 80 at least partly is dropped or inserted into the nut mounting hole 70 in a specified (predetermined or predeterminable) posture from above, and mounted with the rotation thereof prevented while the lower edge(s) thereof are received by the receiving portion(s) 71. At that time, the upper surface of the nut 80 particularly comes to a position substantially flush with the placing surface 65 as shown in FIG. 9.

The main portion 31 and the auxiliary portion 34 of the power supply terminal 30 are connected particularly by bolting on the mounting surface 63 of the terminal block 60. Thus, a nut mounting hole 73 into which a nut 80 having the substantially same shape as the one described above at least partly is to be mounted with the rotation thereof prevented is formed in the mounting surface 63 of the terminal block 60.

This nut mounting hole 73 particularly substantially has a rectangular or polygonal planar shape in conformity with the outer shape of the nut 80 and penetrates in forward and backward directions. One or more vertical contact portions 74 with which lateral (left and/or right) cut portion(s) 81 of the nut 80 is/are to be brought into contact are formed on (particularly both lateral (left and right) edges of) a back part of the nut mounting hole 73.

The nut 80 particularly at least partly is pushed or inserted or engaged into the nut mounting hole 73 in a specified (predetermined or predeterminable) posture from front and stopped being pushed by the lateral (left and/or right) cut portion(s) 80 coming into contact with the contact portion(s) 74, thereby being mounted in the nut mounting hole 73 with the rotation thereof prevented. At that time, the lower surface (surface formed with the cut portions 81) of the nut 80 comes to a position substantially flush with the mounting surface 63.

Note that a flange bolt with a hexagonal hole is, for example, used as a bolt 85.

Each terminal block 60 can be temporarily held on each mounting surface 50A to 50C of the holder 40. Thus, as shown in FIG. 2, a step portion 75 is formed on the lower surface of the horizontal portion 62 of the terminal block 60 to project downward in a central part in its depth direction, and a temporary accommodating groove 76 which is open toward the back side (left side in FIG. 2) particularly is formed in a step surface of the step portion 75. The upper surface of the temporary accommodating groove 76 is flush with the lower surface of the horizontal portion 62 behind the step portion 75.

Note that tapered or rounded reinforcing plates 77 whose bottom edges are located gradually higher toward the front side are integrally or unitarily formed on a side of the step portion 75 substantially opposite to the first portion 61, particularly on the lateral (left and/or right) edge(s) extending from the lower surface of the step portion 75 to the lower surface of the horizontal portion 62 in the terminal block 60 (see e.g. FIG. 2).

On the other hand, one or more fitting plates 51 at least partly fittable into the one or more temporary accommodating grooves 76 of the terminal blocks 60 are formed to (particularly substantially horizontally) project outward from the respective mounting surfaces 50A to 50C.

Since the positions of the main portions 31 of the power supply terminals 30 provided on the busbars 10A to 10C differ in three stages in the radial direction of the holder 40 at the respective accommodating positions 46A to 46C, the positions of the projecting ends of the fitting plates 51 differ in three stages in the radial direction of the holder 40.

As shown in FIG. 4, since the main portion 31 of the power supply terminal 30 on the busbar 10C with the minimum diameter out of the three busbars 10 projects from the third accommodating groove 45C from the outer side, i.e. the backmost one out of the outer three accommodating grooves 45, the fitting plate 51 is formed to directly project from the distal or upper edge of the corresponding rightmost mounting surface 50C when viewed from front.

Since the main portion 31 of the power supply terminal 30 on the busbar 10B with the middle or intermediate diameter projects from the second or intermediate accommodating groove 45B from the outer side, a bulging portion 52B having a thickness corresponding to an arrangement interval of the accommodating grooves 45 in the radial direction is formed to project from the corresponding most lateral or leftmost mounting surface 50B and the fitting plate 51 projects from the upper or distal edge of this bulging portion 52B.

Since the main portion 31 of the power supply terminal 30 on the busbar 10A with the maximum diameter projects from the outermost accommodating groove 45A, a bulging portion 52A having a thickness, which is larger than (e.g. about twice) the arrangement interval of the accommodating grooves 45 in the radial direction, is formed to project from the corresponding middle or intermediate mounting surface 50A and the fitting plate 51 projects from the upper or distal edge of this bulging portion 52A.

Next, an example of an assembling procedure of the central power supply member S according to this embodiment is described.

The holder 40 is placed, for example, on an assembling table. First, the neutral point busbar 15 composed of or comprising the plural (e.g. five) divided busbars 16 at least partly is inserted and accommodated into the innermost accommodating groove 45D out of the four accommodating grooves 45 of the holder 40 while being arranged in the ring shape shown in FIG. 1. The horizontal or lateral projecting portions 22 of the plural (e.g. thirty) connecting terminals 30 provided on the neutral point busbar 15 are located above the upper surface of an inner wall 42 of the holder 40 and the connecting portions 21 thereof project a specified (predetermined or predeterminable) distance inwardly of the inner wall 42 toward the center of the holder 40 as shown in FIG. 4.

Subsequently, the busbar 10C with the minimum diameter at least partly is inserted and accommodated into the second accommodating groove 45C from the inner side in such a rotational posture that the main portion 31 of the power supply terminal 30 conforms to the accommodating position 46C. An upper or distal end part of the main portion 31 projects upward from between the pair of holding walls 47 at the accommodating position 46C, and the horizontal or lateral projecting portion 22 of the connecting terminal 20 neighboring on the lateral (e.g. left) side projects upward from between the auxiliary holding walls 48. The horizontal projecting portions 22 of the plural (e.g. ten) connecting terminals 20 provided on the busbar 10C with the minimum diameter including this connecting terminal 20 are located above the upper surface of the innermost accommodating groove 45D and the connecting portions 21 thereof particularly project substantially the same distance as the previous connecting portions 21 inwardly of the inner wall 42 substantially toward the center of the holder 40.

Subsequently, the at least one busbar 10B with the intermediate or middle diameter at least partly is inserted and accommodated into the next intermediate (e.g. third) accommodating groove 45B from the inner side in such a rotational posture that the main portion 31 of the power supply terminal 30 conforms to the accommodating position 46B. An upper end part of the main portion 31 projects upward from between the pair of holding walls 47 at the accommodating position 46B, and the horizontal projecting portion 22 of the connecting terminal 20 neighboring on the lateral (e.g. left) side projects upward adjacent to the auxiliary hiding wall(s) 48, particularly substantially from between the auxiliary holding walls 48. The horizontal projecting portions 22 of the plural (e.g. ten) connecting terminals 20 provided on the busbar 10B with the middle or intermediate diameter including this connecting terminal 20 are located above the upper surfaces of the innermost and second innermost accommodating grooves 45D, 45C and the connecting portions 21 thereof particularly project substantially the same distance as the previous connecting portions 21 inwardly of the inner wall 42 toward the center of the holder 40.

Finally, the busbar 10A with the maximum diameter at least partly is inserted and accommodated into the outermost accommodating groove 45A in such a rotational posture that the main portion 31 of the power supply terminal 30 conforms to the accommodating position 46A. An upper end part of the main portion 31 projects upward adjacent to the holding wall(s) 47, particularly substantially from between the pair of holding walls 47 at the accommodating position 46A, and the horizontal projecting portion 22 of the connecting terminal 20 neighboring on the lateral (left) side projects upward from between the auxiliary holding walls 48. The horizontal projecting portions 22 of the ten connecting terminals 20 provided on the busbar 10A with the maximum diameter including this connecting terminal 20 are located above the upper surfaces of the innermost, second innermost and third innermost accommodating grooves 45D, 45C and 45B and the connecting portions 21 thereof particularly substantially project substantially the same distance as the previous connecting portions 21 inwardly of the inner wall 42 toward the center of the holder 40.

In the above way, the accommodation of the neutral point busbar 15 and the three busbars 10A to 10C into the holder 40 is completed. In this way, the three busbars 10A to 10C and the neutral point busbar 15 substantially are concentrically arranged in the holder 40 while being insulated from each other with the partition walls 43 at least partly located therebetween as shown in FIG. 3. Plural connecting terminals 20 (particularly a total of thirty connecting terminals 20) of the three busbars 10A to 10C particularly substantially are arranged at equal angular intervals to project substantially toward the center of the holder 40. Further, plural connecting terminals 20 (particularly a total of thirty connecting terminals 20) of the neutral point busbar 15 particularly are arranged at a specified (predetermined or predeterminable) angular interval from and located before the respective connecting terminals 20 of the above busbars 10 in the clockwise direction.

Next, at each accommodating position 46A to 46C, the auxiliary portion 34 is connected to the main portion 31 of the power supply terminal 30 integrally or unitarily formed on the busbar 10A to 10C and, simultaneously, the terminal block 60 is mounted.

For that, after the nut 80 at least partly is mounted into the nut mounting hole 70 provided in the placing surface 65 of the terminal block 60 with the rotation thereof prevented, the connecting plate 37 of the auxiliary portion 34 of the power supply terminal 30 at least partly is inserted into the insertion groove 66, pushed substantially along the placing surface 65 and stopped from being pushed when the mounting plate 35 comes into contact with the mounting surface 63. At this time, as shown in FIG. 9, the projecting end side of the connecting plate 37 of the auxiliary portion 34 particularly is located to at least partly cover the upper surface of the mounted nut 80 and/or the bolt insertion hole 38 and a screw hole 82 of the nut 80 particularly substantially are aligned.

The terminal block 60 in a state where the nut 80 at the placing surface 65 side and the auxiliary portion 34 of the power supply terminal 30 are assembled is temporarily held on the mounting surface 50 at the accommodating position 46. This is described, taking the central accommodating position 46A as an example. When the back end of the horizontal portion 62 of the terminal block 60 is placed on the fitting plate 51 and the terminal block 60 is pushed toward the mounting surface 50A as shown in FIG. 9, the terminal block 60 particularly is stopped from being pushed when the mounting plate 35 of the auxiliary portion 34 comes into contact with the main portion 31 of the power supply terminal 30 arranged at this accommodating position 46A. At this time, the fitting plate 51 at least partly is inserted into the temporary accommodating groove 76 of the terminal block 60, whereby the terminal block 60 is temporarily held so as not to fall or come off.

After the terminal block 60 is temporarily held in this way, the nut 80 is mounted into the nut mounting hole 73 on the back side of the mounting surface 63 with the rotation thereof prevented. Subsequently, the bolt 85 at least partly is inserted through the bolt insertion holes 32, 36 respectively formed in the upper end part of the main portion 31 and the mounting plate 35 of the auxiliary portion 34 at least partly placed one substantially over the other on the mounting surface 63, threadably engaged with the screw hole 82 of the nut 80 and screwed into the nut 80 using a tool, whereby the power supply terminal 30 is formed in which the auxiliary portion 34 is integrally coupled to the main portion 31 and, simultaneously, the terminal block 60 is mounted on the mounting surface 50A.

Also at the other accommodating positions 46B and 46C, an operation of forming the power supply terminal 30 and, simultaneously, mounting the terminal block 60 on the mounting surface 50B, 50C particularly by coupling the main portion 31 and the auxiliary portion 34 by the bolts 85 and the nuts 80 in the same procedure as described above.

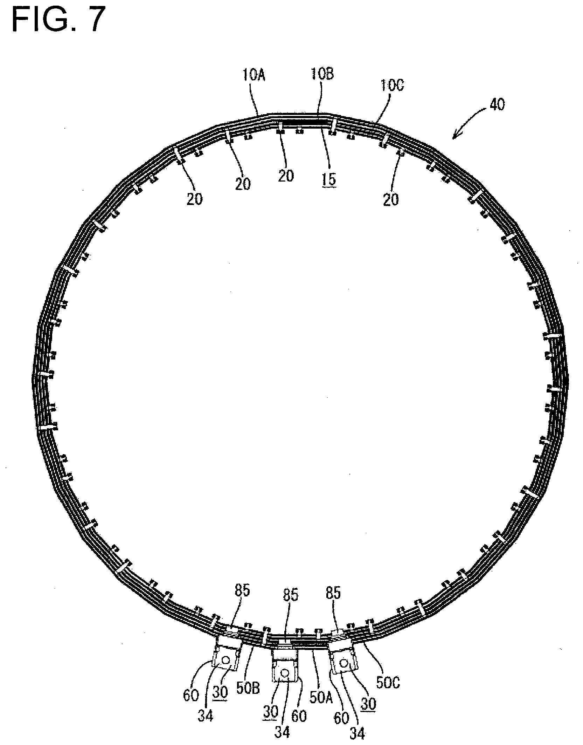

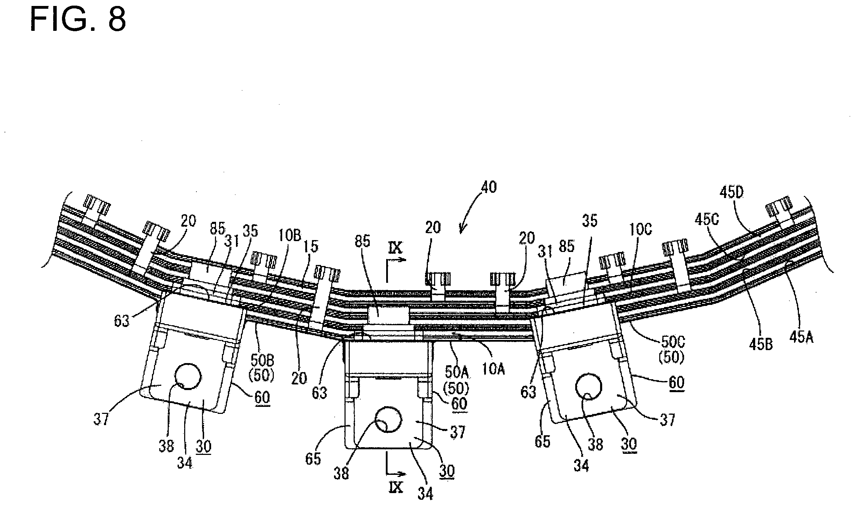

In this way, as shown in FIGS. 7 and 8, the respective power supply terminals 30 of the three busbars 10A to 10C at least partly accommodated in the holder 40 are arranged substantially side by side in such a posture that the connecting plates 37 substantially project radially outward of the holder 40, and the respective terminal blocks 60 are mounted on the corresponding mounting surfaces 50A to 50C with the connecting plates 37 of the power supply terminals 30 substantially placed on the placing surfaces 65.

In the above manner, the assembling of the central power supply member S is completed.

The central power supply member S assembled as described above is to be arranged around the stator of the brushless motor, one ends of the corresponding windings provided in the stator are connected to the connecting portions 21 of the plural (e.g. thirty) connecting plates 20 of the busbars 10 provided on the inner peripheral side of the central power supply member S particularly by fusing, soldering or the like. Further, the other ends of the windings are likewise connected to the connecting portions 21 of the corresponding connecting terminals 20 of the neutral point busbar 15 particularly by fusing, soldering or the like. In this way, star connection is completed.

Thereafter, for example, the central power supply member S and the stator excluding the placing surface 65 sides of the respective terminal blocks 60 particularly at least partly are embedded in a molded article.

To connect the central power supply member S to the power supply, the mating power-supply side terminal at least partly is placed on the connecting plate 37 of the power supply terminal 30 arranged on the placing surface 65 of each terminal block 60, an unillustrated bolt is inserted into the bolt insertion hole 38 of the connecting plate 37 from a center hole of the power-supply side terminal, threadably engaged with the screw hole 82 of the nut 80 mounted on the underside of the placing surface 65 with the rotation thereof prevented and screwed into the nut 80 using the tool, whereby the connecting plate 37 of the power supply terminal 30 and the power-supply side terminal are coupled to establish an electrical connection.

A basic structure of the central power supply member S of this embodiment is such that a plurality of ring-shaped busbars 10 (including the neutral point busbar 15) are concentrically arranged and accommodated in the holder 40, the connecting terminals 20 are provided to substantially extend radially inward of the busbars 10 while the power supply terminals 30 are provided to substantially extend radially outward, only the main portions 31 of the power supply terminals 30 are integrally or unitarily formed to the busbars 10A to 10C substantially along the axial direction, and the L-shaped or bent auxiliary portions 34 are separately formed and attached later. Thus, in accommodating the busbars 10 (including the neutral point busbar 15) into the holder 40, the busbars 10 only have to be successively at least partly inserted into the accommodating grooves 45 provided in the holder 40 from the innermost accommodating groove.

Further, when the auxiliary portions 34 particularly are or can be later attached to the main portions 31 of the power supply terminals 30 on the busbars 10A to 10C by bolting, the terminal blocks 60 having the auxiliary portions 34 placed thereon are simultaneously mounted on the specified (predetermined or predeterminable) mounting surfaces 50A to 50C. Thus, in connecting the power supply terminal 30 to the mating power-supply side terminal, a connecting operation can be easily performed only by at least partly placing the power-supply side terminal on the power supply terminal 30 (connecting plate 37) on the terminal block 60 and securing them particularly by the bolt.

That is, in assembling the central power supply member S of the type that the power supply terminals 30 substantially project radially outward (one direction) and the connecting terminals 20 substantially project radially inward (another substantially opposite direction) on one lateral edges of the busbars 10, it is not necessary to bend the connecting terminals 20. Thus, the assembling operation itself becomes simpler and the connecting operation of the power supply terminal 30 and the mating power-supply side terminal can be easily performed by utilizing the terminal block 60.

In addition, since the terminal block 60 particularly is or can be mounted at the same time as the main portion 31 and the auxiliary portion 34 are secured particularly by the bolt, the assembling process can be simplified. Here, the nut 80 used to secure the main portion 31 and the auxiliary portion 34 of the power supply terminal 30 by the bolt and the nut 80 used to secure the power supply terminal 30 (connecting plate 27) and the power-supply side terminal by the bolt particularly are both mounted into the terminal block 60 with the rotation thereof prevented. Since the common nuts 80 particularly are used for both purposes, the number of part types can be suppressed, which can contribute to a cost reduction.

Accordingly, to simplify an operation of assembling a central power supply member itself and an operation of connecting a power-supply side terminal to a power supply terminal, in a central power supply member, a plurality of ring-shaped busbars 10 each including a power supply terminal 30 and connecting terminals 20 to be connected to windings on one lateral edge substantially are concentrically accommodated in a holder 40 made e.g. of synthetic resin or insulating material while being insulated from each other, and power-supply side terminals drawn out from a power supply at least partly are individually placed on the power supply terminals 30 of the respective busbars 10 and connected by tightening bolts. The connecting terminals 20 substantially are formed to project either radially inward or outward of the busbars 10 in unison and the power supply terminals 30 (31) are formed to substantially stand up along an axial direction of the busbars 10. Terminal blocks 60 with which the power supply terminal 30 and the power-supply side terminal at least partly placed one over the other come into contact and in which nuts to be threadably engaged with the bolts are provided at predetermined positions 50 of the holder 40 to be able to be temporarily assembled.

### <Other Embodiments>

The present invention is not limited to the above described and illustrated embodiment. For example, the following embodiments are also included in the present invention provided that they are within the scope of the invention, which is defined by the appended claims.
(1) The neutral point busbar may be arranged at any arbitrary position such as at the outermost side of the concentric arrangement contrary to the above embodiment. Further, a conductive member of a form other than a busbar may be applied.
(2) The present invention is also applicable to a delta connection method including no neutral point.
(3) Although the number of the busbars, i.e. the number of the power supply terminals is three in the above embodiment, the present invention can be also applied when the number of the busbars (power supply terminals) is two, four or more.
(4) Although the power supply terminal has an L shape or bent shape substantially extending radially outward of the busbar in the above embodiment, the present invention is similarly applicable to power supply terminals formed to merely stand up or project substantially along the axial direction of the busbar. In this case, the upper end of the power supply terminal and the mating power-supply side terminal are secured by the bolt on the terminal block temporarily held on the holder.
(5) The power supply terminals formed to merely stand up along the axial direction of the busbars can also be applied when the connecting terminals are formed to extend radially outward of the busbars, and similar effects can be obtained.

### Reference Numerals

S ... central power supply member
10, 10A, 10B, 10C ... busbar
11 ... busbar main body
20 ... connecting terminal
30 ... power supply terminal
31 ... main portion (power supply terminal)
34 ... auxiliary portion (auxiliary power supply terminal)
35 ... mounting plate (one end of auxiliary power supply terminal)
37 ... connecting plate (other end of auxiliary power supply terminal)
40 ... holder
43 ... partition wall
45, 45A, 45B, 45C ... accommodating groove
46, 46A, 46B, 46c ... accommodating position
50, 50A, 50B, 50C ... mounting surface
51 ... fitting plat
60 ... terminal block
61 ... vertical portion
62 ... horizontal portion
63 ... mounting surface
65 ... placing surface
66 ... insertion groove
70 ... nut mounting hole (mounting recess)
73 ... nut mounting hole (mounting recess)
76 ... temporary accommodating groove
80 ... nut
85 ... bolt

## Claims

1. A central power supply member (S) for supplying power to windings of a stator of a motor, wherein:
a plurality of ring-shaped busbars (10), each including a power supply terminal (30; 31) and connecting terminals (20) to be connected to the windings on one lateral edge of each busbar (10), are substantially concentrically accommodated in a holder (40) made of insulating material while being insulated from each other, and power-supply side terminals drawn out from a power supply are to be individually placed on the power supply terminals (30; 31) of the respective busbars (10) and connected to the power supply terminals (30; 31); and wherein
the connecting terminals (20) are formed to substantially project radially inward of the busbars (10) in unison, and the power supply terminals (30; 31) are formed to substantially stand up along an axial direction of the busbars (10);
**characterized in that**
terminal blocks (60) are provided with which the power supply terminal (30; 31) and the power-supply side terminal, at least partly placed one over the other, come into contact;
the terminal blocks (60) are provided at specified positions (50) of the holder (40) to be able to be temporarily assembled so as not to fall or come off by one or more fitting plates (51) of the holder (40) at least partly fittable into the one or more temporary accommodating grooves (76) of each terminal block (60);
L-shaped or bent auxiliary power supply terminals (34) are provided, each auxiliary power supply terminal comprising an one end (35) and an other end (37), wherein the other ends (37) of the auxiliary power supply terminals (34) project radially outward of the busbars (10), the one ends (35) are brought into contact with the outer surfaces of the power supply terminals (30; 31), and the other ends (37) of the auxiliary power supply terminals (34) are to be secured to the power-supply side terminals by bolts on placing surfaces (65) provided on the terminal blocks (60);
each terminal block (60) includes a mounting surface (63) on which the power supply terminal (30; 31) and the one end (35) of the auxiliary power supply terminal (34) at least partly are placed and secured, particularly by a bolt;
each terminal block (60) is formed into an L shape or bent shape, including a first portion (61) standing up substantially along a radially outer surface of the holder (40) and a second portion (62) substantially projecting radially outward from a lower position of the first portion (61); and
the mounting surface (63) is formed on an upper position of a radially outer surface of the first portion (61), the placing surface (65) is formed on an upper surface of the second portion (62), and an insertion groove (66), into which the other end (37) of the auxiliary power supply terminal (34) at least partly is inserted, is formed at a position of the first portion (61) substantially aligned with the upper surface of the second portion (62).

2. A central power supply member according to claim 1, wherein in the terminal blocks (60) nuts to be threadably engaged with the bolts are provided.

3. A central power supply member according to claim 1 or 2, wherein one or more mounting recesses (70; 73) into which nuts (80) to be threadably engaged with the respective bolts (85) are mounted with the rotation thereof prevented are provided at the mounting surface (63) and the placing surface (65).

4. A central power supply member according to claim 3, wherein the nuts (80) arranged at the mounting surface (63) and the placing surface (65) are identically shaped.

5. A method of assembling a central power supply member (S) for supplying power to windings of a stator of a motor, comprising the following steps:
providing a plurality of ring-shaped busbars (10) each including a power supply terminal (30; 31) and connecting terminals (20) to be connected to the windings on one lateral edge of each busbar (10) and substantially concentrically accommodated in a holder (40) made of insulating material while being insulated from each other, and power-supply side terminals drawn out from a power supply to be individually placed on the power supply terminals (30; 31) of the respective busbars (10) and connected to the power supply terminals (30; 31); and
forming the connecting terminals (20) to substantially project radially inward of the busbars (10) in unison and the power supply terminals (30; 31) to substantially stand up along an axial direction of the busbars (10);
**characterized by**
bringing into contact the power supply terminal (30; 31) and the power-supply side terminal, at least partly placed one over the other, with terminal blocks (60) being provided at specified positions (50) of the holder (40) to be able to be temporarily assembled so as not to fall or come off by one or more fitting plates (51) of the holder (40) at least partly fittable into the one or more temporary accommodating grooves (76) of each terminal block (60),
wherein:
L-shaped or bent auxiliary power supply terminals (34) are provided, each auxiliary power supply terminal comprising an one end (35) and an other end (37), wherein the other ends (37) of the auxiliary power supply terminals (34) project radially outward of the busbars (10), the one ends (35) are brought into contact with the outer surfaces of the power supply terminals (30; 31), and the other ends (37) of the auxiliary power supply terminals (34) are to be secured to the power-supply side terminals by bolts on placing surfaces (65) provided on the terminal blocks (60);
each terminal block (60) includes a mounting surface (63) on which the power supply terminal (30; 31) and the one end (35) of the auxiliary power supply terminal (34) at least partly are placed and secured, particularly by a bolt;
each terminal block (60) is formed into an L shape or bent shape, including a first portion (61) standing up substantially along a radially outer surface of the holder (40) and a second portion (62) substantially projecting radially outward from a lower position of the first portion (61); and
the mounting surface (63) is formed on an upper position of a radially outer surface of the first portion (61), the placing surface (65) is formed on an upper surface of the second portion (62), and an insertion groove (66), into which the other end (37) of the auxiliary power supply terminal (34) at least partly is inserted, is formed at a position of the first portion (61) substantially aligned with the upper surface of the second portion (62).

6. An assembling method according to claim 5, wherein in the terminal blocks (60) nuts to be threadably engaged with the bolts are provided.

## Patentansprüche

1. Ein zentrales Stromversorgungselement (S) zur Stromversorgung von Wicklungen eines Stators eines Motors, wobei:
eine Vielzahl von ringförmigen Busschienen (10), die jeweils eine Stromversorgungsklemme (30; 31) und Anschlussklemmen (20) aufweisen, die an einer Seitenkante jeder Busschiene (10) mit den Wicklungen zu verbinden sind, im Wesentlichen konzentrisch in einem Halter (40) aus Isoliermaterial aufgenommen sind, während sie voneinander isoliert sind, und wobei aus einer Stromversorgung herausgezogene stromversorgungsseitige Klemmen einzeln auf die Stromversorgungsklemmen (30; 31) der jeweiligen Busschienen (10) zu legen und mit den Stromversorgungsklemmen (30; 31) zu verbinden sind; und wobei
die Anschlussklemmen (20) so ausgebildet sind, dass sie im Wesentlichen radial nach innen von den Busschienen (10) gemeinsam vorstehen, und wobei die Stromversorgungsklemmen (30; 31) so ausgebildet sind, dass sie im Wesentlichen entlang einer axialen Richtung der Busschienen (10) nach oben vorstehen;
**dadurch gekennzeichnet, dass**
Klemmleisten bzw. Klemmenblöcke (*terminal blocks*) (60) vorgesehen sind, mit denen die Stromversorgungsklemme (30; 31) und die zumindest teilweise übereinander angeordnete stromversorgungsseitige Klemme in Kontakt kommen;
die Klemmleisten (60) an bestimmten Positionen (50) des Halters (40) bereitgestellt werden, um vorübergehend so montiert werden zu können, dass sie nicht abfallen oder abgelöst werden können, mittels einer oder mehrerer Montageplatten (51) des Halters (40), die zumindest teilweise in die eine oder mehreren temporären Aufnahmenuten (76) jeder Klemmleiste (60) einsetzbar sind;
L-förmige oder gebogene zusätzliche Stromversorgungsklemmen (34) bereitgestellt werden, wobei jede zusätzliche Stromversorgungsklemme ein Ende (35) und ein anderes Ende (37) aufweist, wobei die anderen Enden (37) der zusätzlichen Stromversorgungsklemmen (34) radial nach außen von den Busschienen (10) vorstehen, wobei die einen Enden (35) mit den Außenflächen der Stromversorgungsklemmen (30, 31) in Kontakt gebracht werden, und wobei die anderen Enden (37) der zusätzlichen Stromversorgungsklemmen (34) an den stromversorgungsseitigen Klemmen durch Bolzen an Stellflächen (65) zu sichern sind, die auf den Klemmleisten (60) bereitgestellt werden;
jede Klemmleiste (60) eine Montagefläche (63) beinhaltet, auf der die Stromversorgungsklemme (30; 31) und das eine Ende (35) der zusätzlichen Stromversorgungsklemme (34) zumindest teilweise platziert und gesichert sind, insbesondere durch einen Bolzen;
jede Klemmleiste (60) in eine L-Form oder in eine gebogene Form gebracht wird, die Folgendes umfasst: einen ersten Abschnitt (61), der im Wesentlichen entlang einer radial äußeren Oberfläche des Halters (40) nach oben absteht, und einen zweiten Abschnitt (62), der im Wesentlichen radial nach außen von einer unteren Position des ersten Abschnitts (61) vorsteht; und
die Montagefläche (63) an einer oberen Position einer radial äußeren Oberfläche des ersten Abschnitts (61) ausgebildet ist, dass die Stellfläche (65) auf einer oberen Oberfläche des zweiten Abschnitts (62) ausgebildet ist, und dass eine Einfühmut (66), in die das andere Ende (37) der zusätzlichen Stromversorgungsklemme (34) zumindest teilweise eingesetzt ist, an einer Position des ersten Abschnitts (61) ausgebildet ist, die im Wesentlichen mit der oberen Oberfläche des zweiten Abschnitts (62) ausgerichtet ist.

2. Ein zentrales Stromversorgungselement nach Anspruch 1, wobei in den Klemmleisten (60) Muttern bereitgestellt werden, die mit den Bolzen gewindewirksam in Eingriff zu bringen sind.

3. Ein zentrales Stromversorgungselement nach Anspruch 1 oder 2, wobei an der Montagefläche (63) und der Stellfläche (65) eine oder mehrere Montageaussparungen (70; 73) bereitgestellt werden, in die Muttern (80) montiert sind, die mit den jeweiligen Bolzen (85) gewindefest in Eingriff zu bringen sind, wobei deren Drehung verhindert wird.

4. Ein zentrales Stromversorgungselement nach Anspruch 3, wobei die an der Montagefläche (63) und der Stellfläche (65) angeordneten Muttern (80) identisch geformt sind.

5. Ein Verfahren zur Montage eines zentralen Stromversorgungselements (S) für die Stromversorgung von Wicklungen eines Stators eines Motors, das die folgenden Schritte umfasst:
Bereitstellen einer Vielzahl von ringförmigen Busschienen (10), die jeweils eine Stromversorgungsklemme (30; 31) und Anschlussklemmen (20) aufweisen, die an einer Seitenkante jeder Busschiene (10) mit den Wicklungen zu verbinden sind, und im Wesentlichen konzentrisch in einem Halter (40) aus Isoliermaterial aufgenommen sind, während sie voneinander isoliert sind, und von aus einer Stromversorgung herausgezogenen stromversorgungsseitigen Klemmen, die einzeln auf die Stromversorgungsklemmen (30; 31) der jeweiligen Busschienen (10) zu legen und mit den Stromversorgungsklemmen (30; 31) zu verbinden sind; und
Bilden der Anschlussklemmen (20), um im Wesentlichen radial nach innen von den Busschienen (10) gemeinsam vorzustehen, und der Stromversorgungsanschlüsse (30; 31), sodass sie im Wesentlichen entlang einer axialen Richtung der Busschienen (10) nach oben vorstehen;
**gekennzeichnet durch**
in Kontakt bringen der Stromversorgungsklemme (30; 31) und der zumindest teilweise übereinander angeordneten stromversorgungsseitigen Klemme, mit Klemmleisten bzw. Klemmenblöcke (*terminal blocks*) (60), die an bestimmten Positionen (50) des Halters (40) bereitgestellt werden, um vorübergehend so montiert werden zu können, dass sie nicht abfallen oder abgelöst werden können, mittels einer oder mehrerer Montageplatten (51) des Halters (40), die zumindest teilweise in die eine oder mehreren temporären Aufnahmenuten (76) jeder Klemmleiste (60) einsetzbar sind;
wobei:
L-förmige oder gebogene zusätzliche Stromversorgungsklemmen (34) bereitgestellt werden, wobei jede zusätzliche Stromversorgungsklemme ein Ende (35) und ein anderes Ende (37) aufweist, wobei die anderen Enden (37) der zusätzlichen Stromversorgungsklemmen (34) radial nach außen von den Busschienen (10) vorstehen, wobei die einen Enden (35) mit den Außenflächen der Stromversorgungsklemmen (30, 31) in Kontakt gebracht werden, und wobei die anderen Enden (37) der zusätzlichen Stromversorgungsklemmen (34) an den stromversorgungsseitigen Klemmen durch Bolzen an Stellflächen (65) zu sichern sind, die auf den Klemmleisten (60) bereitgestellt werden;
jede Klemmleiste (60) eine Montagefläche (63) beinhaltet, auf der die Stromversorgungsklemme (30; 31) und das eine Ende (35) der zusätzlichen Stromversorgungsklemme (34) zumindest teilweise platziert und gesichert sind, insbesondere durch einen Bolzen;
jede Klemmleiste (60) in eine L-Form oder in eine gebogene Form gebracht wird, die Folgendes umfasst: einen ersten Abschnitt (61), der im Wesentlichen entlang einer radial äußeren Oberfläche des Halters (40) nach oben absteht, und einen zweiten Abschnitt (62), der im Wesentlichen radial nach außen von einer unteren Position des ersten Abschnitts (61) vorsteht; und wobei
die Montagefläche (63) an einer oberen Position einer radial äußeren Oberfläche des ersten Abschnitts (61) ausgebildet ist, wobei die Stellfläche (65) auf einer oberen Oberfläche des zweiten Abschnitts (62) ausgebildet ist, und wobei eine Einfühmut (66), in die das andere Ende (37) der zusätzlichen Stromversorgungsklemme (34) zumindest teilweise eingesetzt ist, an einer Position des ersten Abschnitts (61) ausgebildet ist, die im Wesentlichen mit der oberen Oberfläche des zweiten Abschnitts (62) ausgerichtet ist.

6. Das Montageverfahren nach Anspruch 5 wobei in den Klemmleisten (60) Muttern bereitgestellt werden, die mit den Bolzen gewindewirksam in Eingriff zu bringen sind.

## Revendications

1. Un élément central d'alimentation en énergie (S) pour fournir de l'énergie à des enroulements d'un stator d'un moteur, sachant que :
une pluralité de rails conducteurs annulaires (10), incluant chacun une borne d'alimentation (30 ; 31) et des bornes de connexion (20) à connecter aux enroulements sur un bord latéral de chaque rail conducteur (10), sont logés de manière essentiellement concentrique dans un support (40), réalisé dans un matériau isolant, tout en étant isolés les uns des autres, et des bornes côté alimentation sorties d'une alimentation électrique sont à placer individuellement sur les bornes d'alimentation (30 ; 31) des rails conducteurs respectifs (10) et reliées aux bornes d'alimentation (30 ; 31), et sachant que
les bornes de connexion (20) sont formées pour saillir en substance radialement vers l'intérieur des rails conducteurs (10) conjointement, et que les bornes d'alimentation (30 ; 31) sont formées pour saillir essentiellement vers le haut le long d'une direction axiale des rails conducteurs (10) ;
**caractérisé en ce que**
des blocs à bornes (60) sont fournis, par lesquels la borne d'alimentation (30 ; 31) et la borne côté alimentation, au moins partiellement superposées, entrent en contact ;
les blocs à bornes (60) sont prévus en des positions spécifiées (50) du support (40) pour pouvoir être assemblés temporairement de manière à ne pas tomber ou se détacher au moyen d'une ou plusieurs plaques de montage (51) du support (40) au moins partiellement adaptables dans une ou plusieurs rainures de logement temporaires (76) de chaque bloc à bornes (60) ;
des bornes d'alimentation auxiliaires (34) en forme de L ou coudées sont prévues, chaque borne d'alimentation auxiliaire comprenant une extrémité (35) et une autre extrémité (37), sachant que les autres extrémités (37) des bornes d'alimentation auxiliaires (34) saillent radialement vers l'extérieur depuis le rails conducteurs (10), que les unes extrémités (35) sont mises en contact avec les surfaces extérieures des bornes d'alimentation (30 ; 31), et que les autres extrémités (37) des bornes d'alimentation auxiliaires (34) sont à bloquer auprès des bornes côté alimentation par des vis sur des surfaces de placement (65) prévues sur les blocs à bornes (60) ;
chaque bloc à bornes (60) inclut une surface de montage (63) sur laquelle la borne d'alimentation (30 ; 31) et ladite une extrémité (35) de la borne d'alimentation auxiliaire (34) sont au moins partiellement placées et bloquées, notamment par une vis ;
chaque bloc à bornes (60) est formé en forme de L ou en forme coudée, incluant une première partie (61) se dressant essentiellement le long d'une surface radialement extérieure du support (40), et une deuxième partie (62) faisant saillie essentiellement de manière radiale vers l'extérieur depuis une position inférieure de la première partie (61) ; et que
la surface de montage (63) est formée sur une position supérieure d'une surface radialement extérieure de la première partie (61), la surface de placement (65) est formée sur une surface supérieure de la deuxième partie (62), et qu'une rainure d'insertion (66), dans laquelle l'autre extrémité (37) de la borne d'alimentation auxiliaire (34) est introduite au moins partiellement, est formée à une position de la première partie (61) essentiellement alignée avec la surface supérieure de la deuxième partie (62).

2. Un élément central d'alimentation en énergie d'après la revendication 1, sachant que sont prévus dans les blocs à bornes (60) des écrous qui sont destinés à venir en prise par vissage avec les vis.

3. Un élément central d'alimentation en énergie d'après la revendication 1 ou 2, sachant qu'un ou plusieurs évidements de montage (70 ; 73), dans lesquels des écrous (80), destinés à venir en prise par vissage avec les vis respectives (85), sont montés avec leur rotation empêchée, sont prévus sur la surface de montage (63) et la surface de placement (65).

4. Un élément central d'alimentation en énergie d'après la revendication 3, sachant que les écrous (80) disposés auprès de la surface de montage (63) et la surface de placement (65) sont de forme identique.

5. Un procédé d'assemblage d'un élément central d'alimentation en énergie (S) pour alimenter en énergie des enroulements d'un stator d'un moteur, comprenant les étapes suivantes :
fournir une pluralité de rails conducteurs annulaires (10) comprenant chacun une borne d'alimentation (30 ; 31) et des bornes de connexion (20) à connecter aux enroulements sur un bord latéral de chaque rail conducteur (10), et à loger de manière essentiellement concentrique dans un support (40), réalisé dans un matériau isolant, tout en étant isolées les uns des autres, et des bornes côté alimentation électrique sorties d'une alimentation électrique à placer individuellement sur les bornes d'alimentation (30 ; 31) des rails conducteurs respectifs (10) et reliées aux bornes d'alimentation (30 ; 31), et
former les bornes de connexion (20) pour faire saillie en substance radialement vers l'intérieur des rails conducteurs (10) conjointement, et former les bornes d'alimentation (30 ; 31) pour se dresser essentiellement le long d'une direction axiale des rails conducteurs (10) ;
**caractérisé par** le fait de
mettre en contact la borne d'alimentation (30 ; 31) et de la borne côté alimentation, au moins partiellement superposées, par des blocs à bornes (60) prévus en des positions spécifiées (50) du support (40) pour pouvoir être assemblés temporairement de manière à ne pas tomber ou se détacher au moyen d'une ou plusieurs plaques de montage (51) du support (40) au moins partiellement adaptables dans la ou les plusieurs rainures de logement temporaires (76) de chaque bloc à bornes (60) ;
sachant que :
des bornes d'alimentation auxiliaires (34) en forme de L ou coudées sont prévues, chaque borne d'alimentation auxiliaire comprenant une extrémité (35) et une autre extrémité (37), sachant que les autres extrémités (37) des bornes d'alimentation auxiliaires (34) saillent radialement vers l'extérieur des rails conducteurs (10), que les unes extrémités (35) sont mises en contact avec les surfaces extérieures des bornes d'alimentation (30 ; 31), et que les autres extrémités (37) des bornes d'alimentation auxiliaires (34) sont à bloquer auprès des bornes côté alimentation par des vis sur des surfaces de placement (65) prévues sur les blocs à bornes (60) ;
chaque bloc à bornes (60) inclut une surface de montage (63) sur laquelle la borne d'alimentation (30 ; 31) et ladite une extrémité (35) de la borne d'alimentation auxiliaire (34) sont au moins partiellement placées et bloquées, notamment par une vis ;
chaque bloc à bornes (60) est formé en forme de L ou en forme coudée, incluant une première partie (61) se dressant essentiellement le long d'une surface radialement extérieure du support (40), et une deuxième partie (62) faisant saillie essentiellement de manière radiale vers l'extérieur depuis une position inférieure de la première partie (61) ; et que
la surface de montage (63) est formée sur une position supérieure d'une surface radialement extérieure de la première partie (61), la surface de placement (65) est formée sur une surface supérieure de la deuxième partie (62), et qu'une rainure d'insertion (66), dans laquelle l'autre extrémité (37) de la borne d'alimentation auxiliaire (34) est introduite au moins partiellement, est formée à une position de la première partie (61) essentiellement alignée avec la surface supérieure de la deuxième partie (62).

6. Un procédé d'assemblage d'après la revendication 5, sachant que sont prévus dans les blocs à bornes (60) des écrous qui sont destinés à venir en prise par vissage avec les vis.
